# EUROPEAN PATENT APPLICATION

(11) **EP 1 489 875 A1**
(43) Date of publication of application: **22.12.2004**
(21) Application number: 04014389.3
(22) Date of filing: 18.06.2004
(51) Int. Cl.: H04Q 7/38, H04B 7/26

(54) **Extended dynamic resource allocation in packet data transfer**

(30) Priority: 18.06.2003 GB 0314093
(71) Applicant: MATSUSHITA ELECTRIC INDUSTRIAL CO., LTD., Kadoma-shi, Osaka 571-8501 (JP)
(72) Inventor: Beard, Timothy Giles, Newbury Berkshire RG20 8HP (GB); Cooper, David Edward, Newbury, Berkshire RG14 6PP (GB)
(74) Representative: Grünecker, Kinkeldey, Stockmair & Schwanhäusser Anwaltssozietät

(57) **Abstract**

A method for control of packet data transmissions in a TDMA wireless network to provide for additional choices in the allocation of communication channels. The fixed relationship in the timing of the downlink allocation signalling and subsequent uplink transmission is altered for certain classes of mobile station to avoid physical constraints. Examples of variations in USF signalling in GPRS are given.

## Description

### BACKGROUND OF THE INVENTION

### 1. Field of the Invention

This invention relates to multiple access communication systems and in particular it relates to dynamic resource allocation in time division multiple access systems.

### 2. Description of Related Art

In Multiple access wireless systems such as GSM, a number of mobile stations communicate with a network. The allocation of physical communication channels for use by the mobile stations is fixed. A description of the GSM system may be found in The GSM System for Mobile Communications by M. Mouly and M. B. Pautet, published 1992 with the ISBN reference 2-9507190-0-7.

With the advent of packet data communications over Time Division Multiple Access (TDMA) systems, more flexibility is required in the allocation of resources and in particular in the use of physical communication channels. For packet data transmissions in General Packet Radio Systems (GPRS) a number of Packet Data CHannels (PDCH) provide the physical communication links. The time division is by frames of 4.615 ms duration and each frame has eight consecutive 0.577 ms slots. A description of the GPRS system may be found in (3GPP TS 43.064 v5.1.1). The slots may be used for uplink or downlink communication. Uplink communication is a transmission from the mobile station for reception by the network to which it is attached. Reception by the mobile station of a transmission from the network is described as downlink.

In order to utilise most effectively the available bandwidth, access to channels can be allocated in response to changes in channel conditions, traffic loading, Quality of Service and subscription class. Owing to the continually changing channel conditions and traffic loadings a method for dynamic allocation of the available channels is available.

The amounts of time that the mobile station receives downlink or transmits uplink may be varied and slots allocated accordingly. The sequences of slots allocated for reception and transmission at a mobile station, the so-called multislot pattern is usually described in the form RXTY. The allocated receive (R) slots being the number X and the allocated transmit slots (T) the number Y.

A number of multislot classes, one through to 45, is defined for GPRS operation and the maximum uplink (transmission: Tx) and downlink (reception: Rx) slot allocations at a mobile station are specified for each class.

In a GPRS system, access to a shared channel is controlled by means of an Uplink Status Flag (USF) transmitted on the downlink in each downlink slot to each communicating mobile station (MS). In GPRS two allocation methods are defined, which differ in the convention about which uplink slots are made available on receipt of a USF in a certain downlink slot. The present invention relates to a particular allocation method, in which a number "N" of PDCHs (where a "PDCH" uses a pair of uplink and downlink slots corresponding to each other on a 1-1 basis) are allocated for potential use by the MS. The uplink slots available for actual use by a particular mobile station sharing the uplink channel are indicated in the USF. The USF is a data item capable of taking 8 values V0- V7, and allows uplink resources to be allocated amongst up to 8 mobiles where each mobile recognises one of these 8 values as "valid", i.e. conferring exclusive use of resources to that mobile. A particular mobile station may recognise a different USF value on each of the slots assigned to that mobile station. In the case of the extended dynamic allocation method, the allocation of uplink slots in the next frame is indicated by the position of the lowest numbered slot that contains a "valid" USF. That is, USF information element takes the value indicating this USF is "valid" for that mobile station. For example, reception of a valid USF in the slot 2 of the present frame will indicate the actual availability for transmission of transmit slots 2...*N* in the next TDMA frame or group of frames, where *N* is the number of allocated PDCHs. Generally for a valid USF received at receiver slot n, transmission takes place in the next transmit frame at transmit slots n, n+1 et seq. to the allocated number of slots (*N*). Thus there is a single, fixed, timing relationship between the first downlink slot in which a valid USF is received and the allocated uplink resources. For the extended dynamic allocation method as presently defined these allocated slots are always consecutive.

The mobile station is not able instantly to switch from a receive condition to a transmit condition or vice versa and the time allocated to these reconfigurations is known as turnaround time. The turnaround time is a concept including both a time required for switching from a receive condition to a transmit condition, that is, a time required for getting ready to transmit, and a time required for switching from a transmit condition to a receive condition, that is, a time required for getting ready to receive. It is also necessary for the mobile station, whilst in packet transfer mode, to perform adjacent cell signal level measurement. The mobile station has continuously to monitor all Broadcast Control Channel (BCCH) carriers as indicated by the BA (GPRS) list and the BCCH carrier of the serving cell. A received signal level measurement sample is taken in every TDMA frame, on at least one of the BCCH carriers (3GPP TS 45.008v5 10.0). The turnaround and adjacent cell signal level measurement times guaranteed by the network for a mobile station depend on the multislot class to which the mobile claims conformance (3GPP TS 45.002v5.9.0 Annex B).

The adjacent cell signal level measurements are taken prior to re-configuration from reception to transmission or prior to re-configuration from transmission to reception. As the combination of adjacent cell signal level measurement and turnaround, it is noted that there are four patterns of combinations as described later, including the (two patterns of) combinations of adjacent cell signal level measurement and turnaround (getting ready to transmit or getting ready to receive: hereafter referred to as "transmit/receive preparation" in abbreviated terms) and (another two patterns of) turnaround (transmit/receive preparation) only. Hereafter, these combinations are abbreviated as "turnaround (and adjacent cell signal level measurement)."

A mobile station operating in extended dynamic allocation mode presently must begin uplink transmission in the Tx timeslot corresponding to the Rx timeslot in which the first valid USF is recognised. That is to say that there is a single fixed relationship in the timing of the downlink allocation signalling and subsequent uplink transmission. Owing to the physical limitations of single transceiver mobile stations some desirable multislot configurations are not available for use.

These restrictions reduce the availability of slots for uplink transmissions thereby reducing the flow of data and the flexibility of response to changing conditions. There is a need therefore to provide a method with which to enable the use of those multislot configurations currently unavailable for Extended Dynamic Allocation.

### SUMMARY OF THE INVENTION

It is an object of this invention to reduce the restrictions affecting extended dynamic allocation with minimal effect on the existing prescript. This may be achieved by altering the fixed relationship in the timing of the downlink allocation signalling and subsequent uplink transmission for certain classes of mobile station. Thus, rather than there being a single, fixed, timing relationship between the downlink slot containing the valid USF and the allocated uplink slots, there can be a plurality of fixed timing relationships (two in the embodiment below). The timing relationship to be applied depends on the value of the USF and the reception slot in which that USF is received.

In accordance with the invention there is a method for controlling uplink packet data transmissions and a mobile station and base station operating in accordance with the method as set out in the attached claims.

### BRIEF DESCRIPTION OF THE DRAWINGS

Figure 1 illustrates the GPRS TDMA frame structure showing the numbering convention used for uplink (UL) and downlink (DL) timeslots;
Figure 2 illustrates a prior art 4 slot steady state allocation R1T4;
Figure 3 illustrates a 5 slot steady state allocation R1T5 prohibited in the prior art;
Figure 4 illustrates a 5 slot steady state allocation R1T5 enabled by the method of the present invention;
Figure 5 illustrates a shifted USF applied to a class 7 MS with 3 uplink slots allocated;
Figure 6 illustrates a class 7 MS with 2 uplink slots allocated;
Figure 7 is a flow diagram for the implementation of shifted USF in a mobile station;
Figure 8 illustrates a transition from one uplink slot to five uplink slots for a class 34 MS; and
Figure 9 illustrates a transition from four to five uplink slots for a class 34 MS;
Figure 10 is a block diagram illustrating one example of a mobile station which is adaptable to the present embodiment;
Figure 11 is a flowchart for illustrating an operation example of the slot allocation calculator in Figure 10;
Figure 12 is a block diagram for illustrating one example of a base station which is adaptable to the present embodiment; and
Figure 13 is a flowchart for illustrating an operation example of the slot allocation calculator in Figure 12.

### DESCRIPTION OF THE PREFERRED EMBODIMENT

In this embodiment, the invention is applied to a GPRS wireless network operating in accordance with the standards applicable to multislot classes.

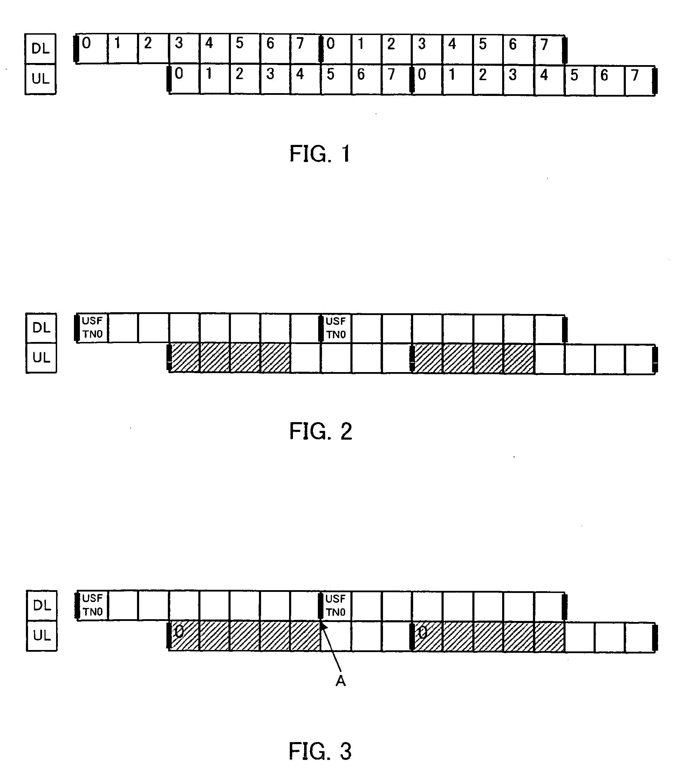

In figure 1 the GPRS TDMA frame structure is illustrated and shows the numbering convention used for uplink (UL) and downlink (DL) timeslots. It should be noted that in practice uplink transmission (Tx) may be advanced relative to downlink transmission (Rx) due to timing advance (TA), although this is not shown in the illustration. Thus in practice the amount of time between the first Rx and first Tx of a frame may be reduced a fraction of a slot from the illustrated value of 3 slots due to timing advance.

In figure 1 two successive TDMA frames are illustrated with downlink (DL) and uplink (UL) slots identified separately. The slot positions within the first frame are shown by the numerals 0 through to 7 with the transmission and reception slots offset by a margin of three slots. This is in accordance with the convention that the first transmit frame in a TDMA lags the first receive frame by an offset of 3 (thus ordinary single slot GSM can be regarded as a particular case in which only slot 1 of transmit and receive is used).

The remaining figures (save for the flowcharts and block diagrams) conform to the illustration of figure 1 but the slot numbering has been removed for enhanced clarity. The shaded slots are those allocated for the particular states. As mentioned above, constraints are imposed by the need to allow turnaround (and adjacent cell signal level measurement) and the prescript for these in 3GPP TS 45.002 Annex B limits dynamic allocation as shown in table 1.

**Table 1**

| Multislot class | Maximum number of slots | | | Minimum number of slots | | | |
|---|---|---|---|---|---|---|---|
| | Rx | Tx | Sum | Tₜₐ | T_{tb} | Tᵣₐ | T_{rb} |
| 7 | 3 | 3 | 4 | 3 | 1 | 3 | 1 |
| 34 | 5 | 5 | 6 | 2 | 1 | 1 | 1 |
| 39 | 5 | 5 | 6 | 2 | 1 | 1+to | 1 |
| 45 | 6 | 6 | 7 | 1 | 1 | 1 | to |

Tₜₐ is the time needed for the MS to perform adjacent cell signal level measurement and get ready to transmit.
T_{tb} is the time needed for the MS to get ready to transmit
Tᵣₐ is the time needed for the MS to perform adjacent cell signal level measurement and get ready to receive.
T_{rb} is the time needed for the MS to get ready to receive
It should be noted that in practice the times Tₜₐ and T_{tb} may be reduced by a fraction of a slot due to timing advance.
tₒ is 31 symbol periods timing advance offset

Here, an explanation is given on the extended dynamic allocation method that is the technique on which the present invention is predicated. According to the extended dynamic allocation method, a pair of a receive frame and a transmit frame corresponds to each other on a 1-1 basis with a predetermined offset, where transmission is started from a transmit slot having the same number as that of a receive slot in which a valid USF was received. The starting of transmission is done from the next transmission frame of the transmission frame corresponding to the reception frame in which a valid USF is received. The number of transmit slots for transmission in a transmit frame equals to the slot numbers allocated to the transmit frame (N), and slots to be transmitted in a transmit frame are always consecutive. The starting position of transmit slots is maintained until the reception of the next valid USF.

For example, with reference to figure 2, a steady state R1T4 allocation (downlink 1 slot and uplink 4 slots) for a class 34 mobile station is illustrated. In this case, one slot is for reception and four slots are for transmission, a valid USF received on receive slot 0 allows four transmit slots on the next uplink frame. Specifically, because a valid USF has been received on Rx slot 0, the starting position of Tx slots in the next transmission frame is Tx slot 0. At this time, the number of transmit slots to be transmitted is 4, which is the same as the number of the allocated transmitted slots, and these four transmit slots are consecutive. The turnaround (and adjacent cell signal level measurement) periods for this class 34 are shown in table 1 as Tᵣₐ, T_{rb} and T_{tb} each having one slot and Tₜₐ having two slots. These periods can be accommodated for this allocation when a valid USF is received in time slot 0.

When the allocation of uplink slots extends to five, however, a constraint arises as indicated in the illustration of figure 3 which is for a class 34 mobile station with an allocation example of R1T5 (one downlink and five uplink slots). The constraint occurs at the position indicated by "A." This is because, in this case, there is no slot left open between Tx slot 4 and Rx slot 0, and therefore it is not possible to assign not only a period (Tᵣₐ) for adjacent cell signal level measurement and turnaround (preparation for reception) for switching from transmission to reception but also a period (T_{rb}) for that turnaround (preparation for reception). It is noted that, regarding a period including adjacent cell signal level measurement, a valid USF is received in the downlink slot 0 and the following one slot can provide for T_{tb} or the following two slots can provide for Tₜₐ.

Thus, in accordance with the invention, for this embodiment, on one hand, the mobile has uplink slots assigned in the usual way, through the use of USF_TN0...USF_TN7 Information Elements in Packet Uplink Assignment and Packet Timeslot Reconfigure messages. On the other hand, the network sends the USF, however, for both first and second assigned timeslots on the downlink PDCH associated with the second assigned timeslot. Thus there are two fixed timing relationships between the downlink timeslot in which the USF value is contained, and the potentially allocated uplink timeslots (called standard USF and "shifted" USF respectively), and which one should be adopted in the next frame is indicated by the value of the USF.

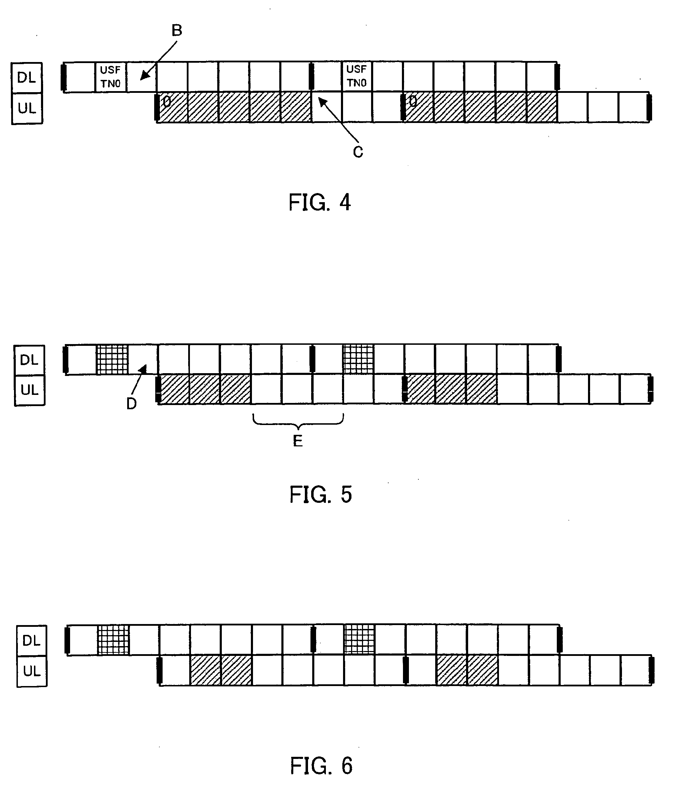

As an example, as described above, a class 34 MS to which one downlink slot and five uplink slots (TN0 - TN4) are assigned is considered. It should be noted that, in this case, the network sends USF_TN0 on timeslot 1 rather than timeslot 0. This arrangement is illustrated in figure 4 where it can be seen that slots marked "B" and "C" provide for T_{tb} and Tᵣₐ respectively. That is, with this shifted USF, it becomes possible to assign time for transmission preparation T_{tb} (1 slot) and time for adjacent cell signal level measurement and reception preparation Tᵣₐ (1 slot), which enables 5 slot steady state R1T5 which has been prohibited in the operation illustrated in figure 3.

In this case, an allocation by the network of 5 uplink slots to the MS will be signalled by the sending of USF_TN0 on timeslot 1. Therefore, the characters of the two signals USF_TN0 and USF_TN1 must differ and must be distinguishable by the mobile station.

It is not necessary to add extra information elements to indicate when the Shifted USF mechanism is to be used, as it may be made implicit in the timeslot allocations for the particular multislot class of the mobile station. Therefore no increase in signalling overhead would be required.

With reference to figure 5, another example of an allocation enabled by implementation of a shifted USF is illustrated in figure 5. The application is a class 7 MS with three uplink slots allocated. The USF on downlink slot 1 allocating the 3 uplink slots indicates that the first uplink slot available is uplink slot 0 rather than the usual slot 1. This provides for the T_{tb} and Tᵣₐ periods (as required by table 1) and as indicated in figure 5 at D and E respectively. That is, with this shifted USF, it becomes possible to assign time for transmission preparation T_{tb} (1 slot) and time for adjacent cell signal level measurement and reception preparation Tᵣₐ (3 slot). The allocation would not previously have been available in prior art for want of a sufficient period for Tᵣₐ.

The 2 slot allocation example illustrated in figure 6 reverts to normal operation i.e. the USF is not shifted. There are no physical constraints in normal allocations for this 2 slot arrangement of figure 6 and the standard USF in time slot 1 allocates uplink slots beginning with uplink slot number 1.

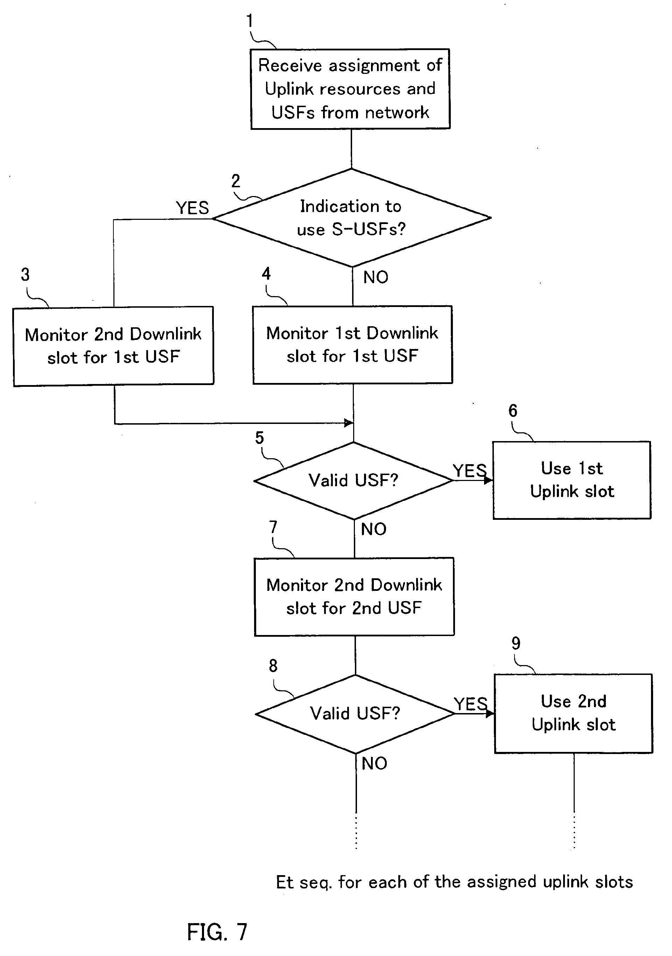

Alternatively it may be convenient to apply positive signalling of the shift in position of the uplink allocation and an implementation of a shifted USF in a mobile station operating extended dynamic allocation is illustrated in figure 7. It should be noted that the step 2 in figure 7 may be explicit (i.e. extra signalling) or implicit (automatic for particular multislot class configuration). With reference to figure 7, the mobile station receives at step 1 an assignment of uplink resources and USF' s from the network. If at step 2, an indication to use a shifted USF is detected then, for the first USF, the second downlink slot is monitored (step 3) otherwise the first downlink slot is monitored (step 4). In either case, when it is judged that a valid USF has been received at step 5 then uplink transmissions are initiated in the first uplink slot from the mobile station (step 6). When it is judged that no valid USF has been received at step 5 then the second downlink slot is monitored for a second USF at step 7 and if the USF is valid (step 8) then uplink transmissions are initiated in the second uplink slot (step 9).

In the examples illustrated in figures 2 to 6 the allocations are steady state such that the allocations shown are maintained from frame to frame. The invention is not restricted to steady state allocations and may be applied also to control of uplink resources that change from one frame to another.

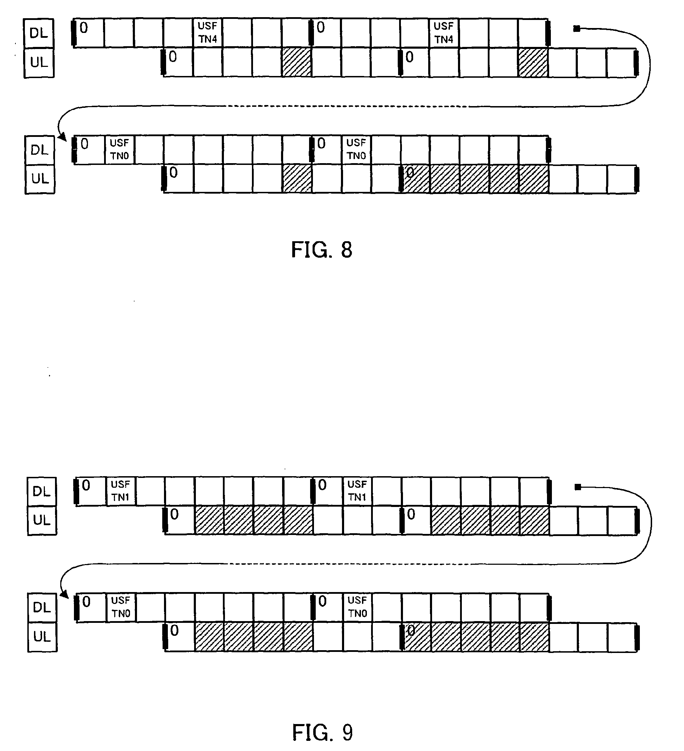

Examples of state transitions are illustrated in figures 8 and 9. These figures each represent four consecutive frames but have been split for presentation in two top/bottom tiers.

Figure 8 illustrates the transition from one uplink slot allocation to five uplink slots allocation, for a Class 34 mobile. The first (top) two frames show steady state operation with one slot and the next (bottom) two frames show the transitional frames. For this transition, both of the value and the slot location of the USF are changed. Specifically, for example, figure 8 illustrates a state transition from R1T1 to R1T5. Because a valid standard USF_TN4 has been received on downlink slot 4 in the R1T1 state, the starting position of transmit slots in the next transmission frame is uplink slot 4. Thereafter, because the value of the USF has been changed to TN0 and in addition the slot position of the USF has been changed to downlink slot 1, the operation of shifted USF is implemented, and the starting position of transmit slots in the next transmission frame (the R1T5 state after transition) is uplink slot 0. At this time, the number of transmit slots to be transmitted is 5, which is the same as the number of the allocated transmitted slots, and these five transmit slots are consecutive.

Figure 9 illustrates the transition from four uplink slots to five uplink slots, for a Class 34 mobile. The first two frames show steady state operation with four slots and the next two frames show the transitional frames. For this transition the USF slot location is constant but the value of the USF is changed. Specifically, for example, figure 9 illustrates a state transition from R1T4 to R1T5. Because a valid standard USF_TN1 has been received on downlink slot 1 in the R1T4 state, the starting position of transmit slots in the next transmission frame is uplink slot 1. Thereafter, because the value of the USF has been changed to TN0 without any change in the slot position of the USF, the operation of shifted USF is implemented, and the starting position of transmit slots in the next transmission frame (the R1T5 state after transition) is uplink slot 0.

In order to implement the invention in GPRS for example a table (Table 2) may be constructed for a Type 1 MS to allow extended dynamic allocation using the principles below:

In the case of extended dynamic allocation it is desirable for the MS to be able to "transmit up to its physical slot limit"; specifically, the MS should be able to transmit the maximum number of slots possible according to the limitation of its multislot class, while continuing to receive and decode the USF value on exactly one slot and performing adjacent cell signal level measurements. If it is not possible to define a multislot configuration which permits the MS to "transmit up to its physical slot limit" using Tᵣₐ, but it would be possible by using Tₜₐ, then Tₜₐ shall be used.

If it is not possible to define a multislot configuration for extended dynamic allocation which permits the MS to "transmit up to its physical slot limit" but it would be possible by using the shifted USF mechanism, then shifted USF shall be used. In this case Tᵣₐ will be used as first preference, but if this is not possible Tₜₐ will be used as second preference.

As described later, a decision whether or not to use the shifted USF is performed by the base station and a selection of Tᵣₐ, T_{tb}, Tₜₐ, T_{rb} is performed by the mobile station.

**Table 2**

| Medium access mode | No of Slots | Tᵣₐ shall apply | Tₜₐ shall apply | Applicable Multislot classes | Note |
|---|---|---|---|---|---|
| Uplink, Ext. Dynamic | 1-3 | Yes | - | 1-12, 19-45 | |
| | 4 | No | Yes | 33-34, 38-39, 43-45 | 2 |
| | 5 | Yes | - | 34, 39 | 5 |
| | 5 | No | Yes | 44-45 | 2,4 |
| | 6 | No | Yes | 45 | 5 |
| Down + up, Ext. Dynamic | d+u = 2-4 | Yes | - | 1-12, 19-45 | |
| | d+u = 5, d > 1 | Yes | - | 8-12, 19-45 | |
| | d = 1, u = 4 | No | Yes | 30-45 | 2 |
| | d+u = 6, d>1 | Yes | | 30-45 | 2,3 |
| | d = 1, u = 5 | Yes | | 34,39 | 5 |
| | d+u = 7, d>1 | No | Yes | 40-45 | 2,4 |
| | d = 1, u = 6 | No | Yes | 45 | 5 |
| Note 1 Normal measurements are not possible (see 3GPP TS 45.008). | | | | | |
| Note 2 Normal BSIC decoding is not possible (see 3GPP TS 45.008). | | | | | |
| Note 3 TA offset required for multislot classes 35-39. | | | | | |
| Note 4 TA offset required for multislot classes 40-45. | | | | | |
| Note 5 Shifted USF operation shall apply (see 3GPP TS 44.060) | | | | | |

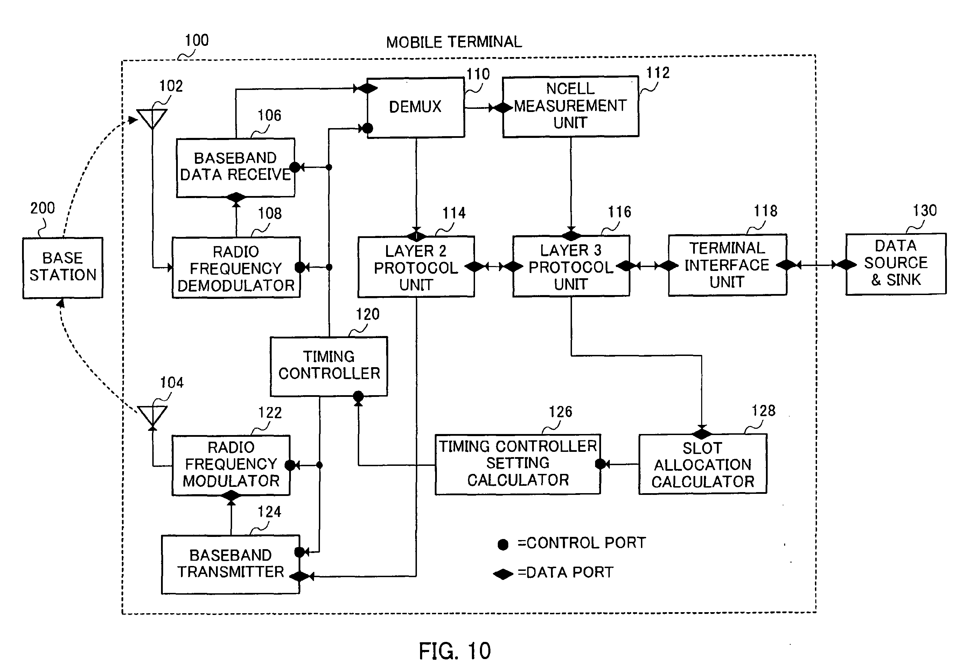

Figure 10 is a block diagram for a mobile station (MS) which is adaptable to the present embodiment.

A mobile station (wireless data communication terminal) 100 allows the bi-directional transfer of data between a base station 200 and an external data source and sink 130.

### Downlink

The base station 200 transmits GPRS signals to the mobile station 100. The GPRS signals are received on the receive antenna 102, and are demodulated to baseband ones by a radio frequency demodulator 108. The radio frequency demodulator 108 delivers the baseband signals to a baseband data receiver 106. The baseband data receiver 106 delivers the received baseband data to a demultiplexer 110. The demultiplexer 110 selects either an NCELL measurement unit 112 or a Layer 2 protocol unit 114 to process the above data, depending on its control input from a timing controller 120.

If the downlink baseband data is destined for the NCELL measurement unit 112, this unit performs adjacent cell signal level measurement, and transmits the resulting information to a Layer 3 protocol unit 116. The Layer 3 protocol unit 116 in turn transmits the data to the base station 200 via the uplink.

Downlink baseband data to be used for adjacent cell signal level measurement is routed to the Layer 3 protocol unit 116. The Layer 3 protocol unit 116 separates user plane data and control plane data. The user data is sent to a terminal interface unit 118. The terminal interface unit 118 sends the data to an external data source and sink 130.

### Control

Control plane data is used to perform internal control functions. In particular, any GPRS slot allocation frames sent from the base station 200 are used to send parameter data to a slot allocation calculator 128. The slot allocation calculator 128 calculates which TDMA slots shall be used for data reception, data transmission, and adjacent cell signal level measurement purposes. This information is sent to a timing controller setting calculator 126. The timing controller setting calculator 126 in turn reconfigures a timing controller 120 so as to perform each operation of receive preparation, transmit preparation, and adjacent cell signal level measurement at the correct time.

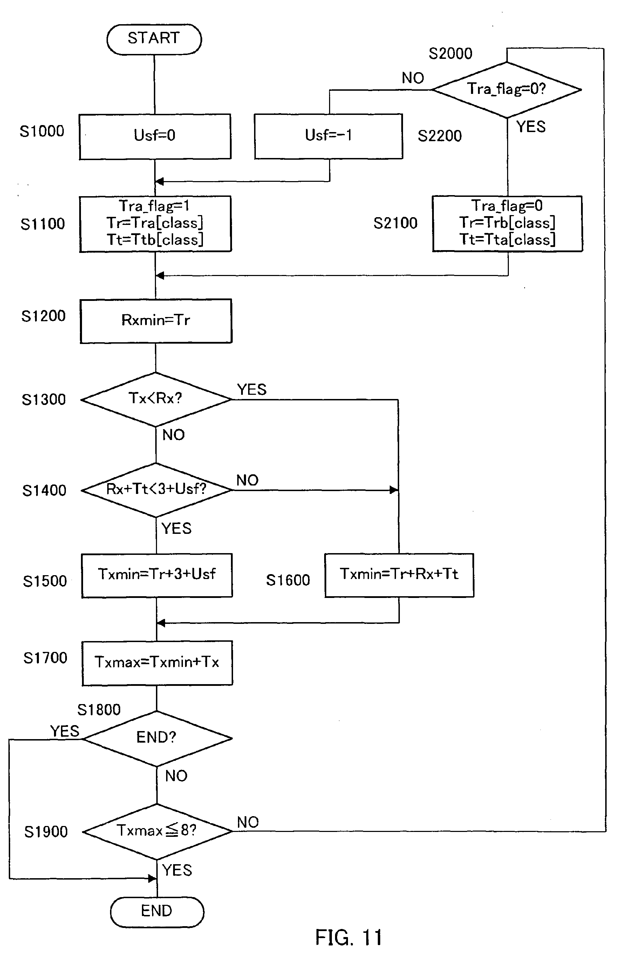

Figure 11 is a flowchart illustrating an operation example of the slot allocation calculator 128.

First, at step S1000, parameter Usf is set at 0. Here, the parameter Usf is a parameter indicating the presence/absence of the use of shifted USF, which shows that the shifted USF is not used when it is 0, that is, a standard USF is used, while the shifted USF should be used when it is -1.

Then, in step S1100, parameter Tra_flag is set into 1, while parameters Tr and Tt are set to values of Tra[class] and Ttb[class] respectively. Herein, Tra_flag is a parameter indicating which one of Tᵣₐ and Tₜₐ should be used as the interval accommodating adjacent cell signal level measurement, where the parameter indicates that Tᵣₐ should be used when set to 1, and that Tₜₐ should be used when set to 0. Tra[class] and Ttb[class] are values of Tᵣₐ and T_{tb} allocated to class (multislot class of a mobile station), which is an input parameter, respectively. The number of the class is the attribute of the mobile station. In addition, the value of Tᵣₐ, T_{tb} corresponding to each class is prestored in the format of, for example, Table 1.

Then, at step S1200, parameter Rxmin is set to the value of Tr as set in step S1100. Here, Rxmin is a parameter indicating the number of the first slot in downlink receive slots.

Then, at step S1300, the number of transmit slots (Tx) and the number of receive slots (Rx) is compared with each other. As the result of the comparison, if Tx ≧ Rx (S1300: NO), the process goes to step S1400, whereas if Tx < Rx (S1300: YES), it moves on to step S1600. It is noted that each value of Tx, Rx is included in the radio resource control plane data from the upper layer.

At step S1400, it is further judged whether Rx + Tt is less than 3 + Usf or not. Here, "3" is the number of slots for downlink and uplink offset. As the result of the judgment, if Rx + Tt < 3 + Usf (S1400: YES), the process goes to step S1500, whereas if Rx + Tt ≧ 3 + Usf (S1400: NO), it moves on to step S1600.

At step S1500, parameter Txmin is set to Tr + 3 + Usf. Meanwhile, at step S1600, parameter Txmin is set to Tr + Rx + Tt. Here, Txmin is a parameter indicating the number of the first slot in uplink transmit slots. Incidentally, the value set in step S1100 is used for Tr and Tt.

Then, at step S1700, parameter Txmax is set to Txmin + Tx. Here, Txmax is a parameter indicating the number of the next slot of the last slot in uplink transmit slots. Incidentally, the value set in step S1500 or step S1600 is used for Txmin.

Then, in step S1800, it is judged whether to end processing or not. Specifically, regarding an identical Usf value, it is judged whether the processing from step S1100 through step S1700 is the first execution or the second execution. As the result of the judgment, if the processing is not ended, that is, if the processing from step S1100 through step S1700 is the first execution (S1800: NO), the process goes to step S1900, whereas if the processing from step S1100 through step S1700 is the second execution (S1800: YES), a string of processing is ended.

At step S1900, it is judged whether Txmax set in step S1700 is less than 8 or not. Here, "8" is the number of slots contained in one frame. As the result of the judgment, if Txmax ≦ 8 (S1900: YES), the string of processing is ended, whereas if Txmax > 8 (S1900: NO), the process goes to step S2000.

At step 2000, it is judged whether parameter Tra_flag is set into 0 or not, that is, whether Tₜₐ is used in place of Tᵣₐ as an interval including adjacent cell signal level measurement. As the result of the judgment, if Tra_flag is put into 0 (S2000: YES), the process goes to step S2100, whereas if Tra_flag is not put into 0 (S2000: NO), it moves on to step S2200.

In step S2100, parameter Tra_flag is set into 0, while parameters Tr and Tt are set to values of Trb[class] and Tta[class] respectively, and after that, the process goes to step S1200 to repeat processing from step S1200 through step S1700. Herein, Trb[class] and Tta[class] are values of T_{rb} and Tₜₐ allocated to class, which is an input parameter, respectively. As described above, the number of class is included in the radio resource control plane data from the upper layer, and in addition, the value of T_{rb}, Tₜₐ corresponding to each class is prestored in the format of Table 1. Incidentally, in this case, upon completion of the processing from step S1200 through step S1700 (S1800: YES), the string of processing is ended.

In step S2200, parameter Usf is set into -1, and the process goes to step S1100 to repeat processing from step S1100 through step S1700. Incidentally, in this case, even when completing the processing from step S1200 through S1700, it is the first execution of processing after the change of the Usf value (S1800: NO), and therefore the processing goes to step S1900.

Upon the completion of the string of processing as the result of the judgment in step S1900 (S1900: YES) or as the result of the judgment in step S1800 (S1800: YES), each value of parameters at the time of the end, Usf, Tra_flag, Rxmin, Txmin, and Txmax, is outputted as information.

In short, first, if the shifted USF is not used, it is checked whether it is possible to use Tᵣₐ as a period accommodating adjacent cell signal level measurement, that is, whether it is possible to use Tᵣₐ and T_{tb} as a combination of intervals. Specifically, if the number of downlink receive slots (Rx) is greater than the number of uplink transmit slots (Tx) (S1300: YES), and if Rx + Tt is equal to or greater than 3 (here, Usf = 0) (S1400: NO), Txmin is set to Tr + Rx + Tt (S1600), and otherwise, Txmin is set to Tr + 3 (S1500). Then, Txmax is set to Txmin + Tx (S1700). Then, if Txmax is equal to or less than 8 (S1900: YES), Tᵣₐ is used as a period accommodating adjacent cell signal level measurement, that is, Tᵣₐ and T_{tb} is used as a combination of intervals.

Contrarily, if Txmax exceeds 8 (S1900: NO), as Tra_flag =1 here, it is then checked whether Tₜₐ can be used as a period accommodating adjacent cell signal level measurement or not, that is, whether T_{rb} and Tₜₐ can be used as a combination of intervals when the shifted USF is not used. Specifically, if the number of downlink receive slots (Rx) is greater than the number of uplink transmit slots (Tx) (S1300: YES), and if Rx + Tt is equal to or greater than 3 (here, Usf = 0) (S1400: NO), Txmin is set to Tr + Rx + Tt (S1600), and otherwise, Txmin is set to Tr + 3 (S1500). Then, Txmax is set to Txmin + Tx (S1700). Then, if Txmax is equal to or less than 8 (S1900: YES), Tₜₐ is used as a period accommodating adjacent cell signal level measurement, that is, T_{rb} and Tₜₐ is used as a combination of intervals.

Contrarily, if Txmax exceeds 8 (S1900: NO), as Tra_flag = 0 here, then, it is judged that the shifted USF is used. It is noted that, also when the shifted USF is used, it is first checked whether Tᵣₐ may be used or not as a period accommodating adjacent cell signal level measurement by performing processing from step S1100 through step S2100, and Tₜₐ is used when Tᵣₐ can not be used. That is, in a case where the shifted USF is used, Tᵣₐ will be used as first preference, but if this is not possible Tₜₐ will be used as second preference.

It is noted that, though the operation example in figure 11 assumes the processing in step S1200 through step S1700 to be reexecuted once again after step S2100 for each Usf value, the invention is not limited to such a case. If any parameters other than Usf and Tra_flag (for example, Rxmin, Txmin, Txmax, etc.) are unnecessary as output, that is, if it is just enough to set Usf and Tra_flag only, the processing may be ended immediately without repeating any processing from step S1200 through step S1700 after step S2100.

The timing controller 120 is responsible for determining and controlling the timing of the transmission and reception of signals toward the base station 200, and the reception of measurement data. In accordance with the calculation result of the slot allocation calculator 128, the timing controller 120 controls the precise timing and behavior of the radio frequency modulator 122, radio frequency demodulator 108, baseband data receiver 106, baseband transmitter 124, and demultiplexer 110. Specifically, it controls each section in such a manner that, if Tra_flag = 1, Tᵣₐ is used as a period accommodating adjacent cell signal level measurement, whereas if Tra_flag = 0, Tₜₐ is used as a period accommodating adjacent cell signal level measurement, and in such a manner that the shifted Usf is not used when Usf = 0, and the shifted Usf is used when Usf = -1.

### Uplink

User data transmitted from an external data source and sink 130 is accepted by a terminal interface unit 118, and given to a Layer 3 protocol unit 116. The Layer 3 protocol unit 116 multiplexes the data with any protocol control data, and transmits it via a Layer 2 protocol unit 114. The Layer 2 protocol unit 114 in turn transmits the multiplexed data to a baseband transmitter 124. Subsequently, the multiplexed data is modulated by a radio frequency modulator 122, and then is transmitted over a transmit antenna 104.

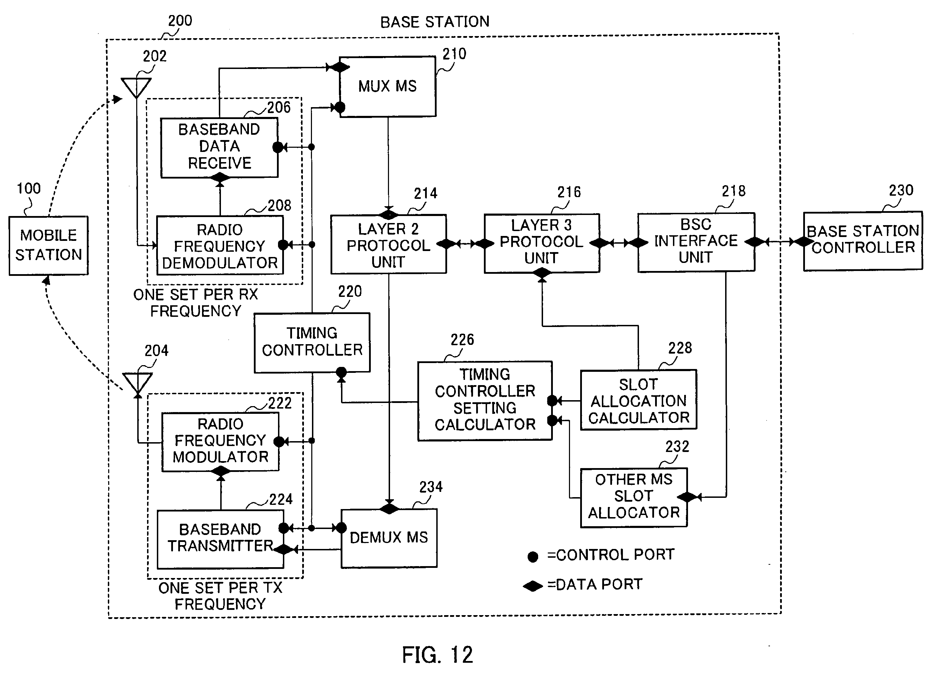

Figure 12 is a block diagram for a base station which is adaptable to the present embodiment.

A wireless base station 200 allows the bi-directional transfer of data between a plurality of mobile stations 100 and an external base station controller (BSC: Base Station Controller) 230.

### Uplink

Each mobile station 100 transmits precisely-timed GPRS signals to the base station 200. The GPRS signals are received on the receive antenna 202, and are demodulated to baseband ones by a radio frequency demodulator 208. The radio frequency demodulator 208 delivers the baseband signals to a baseband data receiver 206. If multiple receive frequencies are used, there is one set of radio frequency demodulator 208 and baseband data receiver 206 per frequency. The baseband data receiver 206 delivers the received baseband data to a multiplexer MS 210. The multiplexer MS 210 marks which MS the data has arrived from depending on its control input from a timing controller 220, and forwards all data to a Layer 2 protocol unit 214. The Layer 2 protocol unit 214 maintains a separate context for each mobile station 100.

Downlink baseband data to be used for adjacent cell signal level measurement is routed to the Layer 3 protocol unit 216. The Layer 3 protocol unit 216 maintains a separate context for each mobile station 100. The Layer 3 protocol unit 216 separates user plane data and radio resource control plane data. User data and radio resource control plane data is sent to a BSC interface unit 218. The BSC interface unit 218 sends the data to an external Base Station Controller 230.

### Control

Radio resource control plane data is used to perform internal control functions. In particular, a slot allocation calculator 228 calculates, typically according to the data rate required, which GPRS slots are allocated for each mobile station 100. This information is sent to the Layer 3 protocol unit 216. The Layer 3 protocol unit 216 sends allocation information to the mobile station 100. This information is also sent to a timing controller setting calculator 226. In addition, other MS slot allocator 232 receives necessary data from the external Base Station Controller 230 via the BSC interface unit 218, and calculates allocation information for other mobile stations. This information is also sent to the timing controller setting calculator 226. The timing controller setting calculator 226 in turn reconfigures a timing controller 220 so as to perform each of receive and transmit actions towards each mobile station 100 at the correct time.

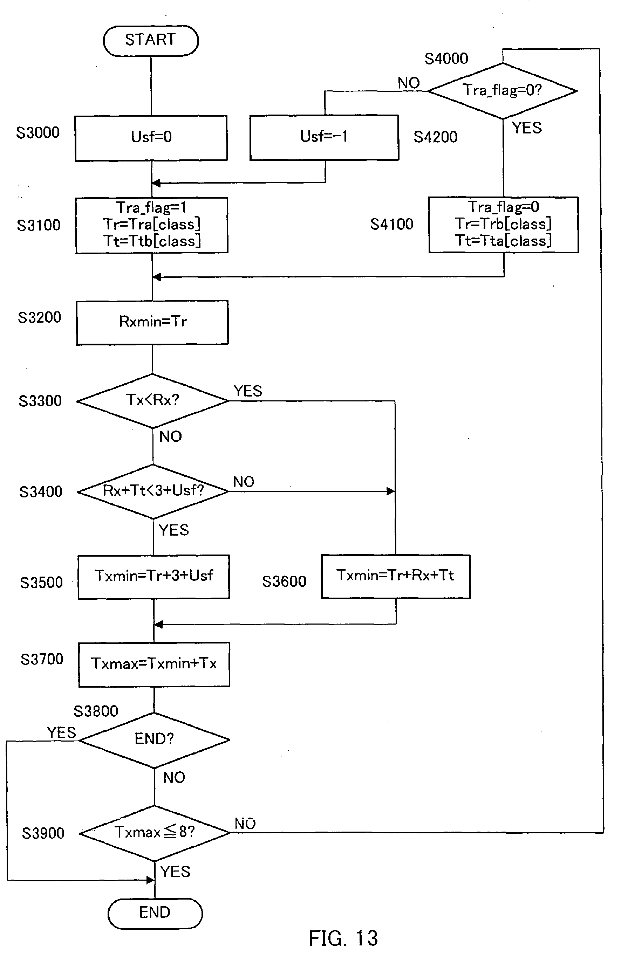

Figure 13 is a flowchart illustrating an operation example of the slot allocation calculator 228. It is noted that, because parameters Usf, Tra_flag, Tr, Tt, Rxmin, Txmin, and Txmax are the same as parameters illustrated in figure 11, explanation thereof is omitted.

First, at step S3000, parameter Usf is set at 0.

Then, in step S3100, parameter Tra_flag is set into 1, while parameters Tr and Tt are set to values of Tra[class] and Ttb[class] respectively. Here, Tra[class] and Ttb[class] are values of Tᵣₐ and T_{tb} allocated to class (multislot class of a mobile station), which is an input parameter, respectively. The number of the class is the attribute of the mobile station. In addition, the value of Tᵣₐ, T_{tb} corresponding to each class is prestored in the format of, for example, Table 1.

Then, at step S3200, parameter Rxmin is set to the value of Tr as set in step S3100.

Then, at step S3300, the number of transmit slots (Tx) and the number of receive slots (Rx) is compared with each other. As the result of the comparison, if Tx ≧ Rx (S3300: NO), the process goes to step S3400, whereas if Tx < Rx (S3300: YES), it moves on to step S3600. It is noted that each value of Tx, Rx is included in the radio resource control plane data from the upper layer.

At step S3400, it is further judged whether Rx + Tt is less than 3 + Usf or not. Here, as described above, "3" is the number of slots for downlink and uplink offset. As the result of the judgment, if Rx + Tt < 3 + Usf (S3400: YES), the process goes to step 53500, whereas if Rx + Tt ≧ 3 + Usf (S3400: NO), it moves on to step S3600.

At step S3500, parameter Txmin is set to Tr + 3 + Usf. Meanwhile, at step S1600, parameter Txmin is set to Tr + Rx + Tt. Here, the value set in step S3100 is used for Tr and Tt.

Then, at step S3700, parameter Txmax is set to Txmin + Tx. Here, the value set in step S3500 or step S3600 is used for Txmin.

Then, in step S3800, it is judged whether to end processing or not. Specifically, regarding an identical Usf value, it is judged whether the processing from step S3100 through step S3700 is the first execution or the second execution. As the result of the judgment, if the processing is not ended, that is, if the processing from step S3100 through step S3700 is the first execution (S3800: NO), the process goes to step S3900, whereas if the processing from step S3100 through step S3700 is the second execution (S3800: YES), a string of processing is ended.

At step S3900, it is judged whether Txmax set in step S3700 is less than 8 or not. Here, as described above, "8" is the number of slots contained in one frame. As the result of the judgment, if Txmax ≦ 8 (S3900: YES), the string of processing is ended, whereas if Txmax > 8 (S3900: NO) , the process goes to step S4000.

At step 4000, it is judged whether parameter Tra_flag is set into 0 or not, that is, whether Tₜₐ is used in place of Tᵣₐ as an interval including adjacent cell signal level measurement. As the result of the judgment, if Tra_flag is put into 0 (S4000: YES), the process goes to step S4100, whereas if Tra_flag is not put into 0 (S4000: NO), it moves on to step S4200.

In step S4100, parameter Tra_flag is set into 0, while parameters Tr and Tt are set to values of Trb[class] and Tta[class] respectively, and after that, the process goes to step S4200 to repeat processing from step S4200 through step S4700. Herein, Trb[class] and Tta[class] are values of T_{rb} and Tₜₐ allocated to class, which is an input parameter, respectively. As described above, the number of class is included in the radio resource control plane data from the upper layer, and in addition, the value of T_{rb}, Tₜₐ corresponding to each class is prestored in the format of Table 1. Incidentally, in this case, upon completion of the processing from step S3200 through step S3700 (S3800: YES), the string of processing is ended.

In step S4200, parameter Usf is set into -1, and the process goes to step S3100 to repeat processing from step S3100 through step S3700. Incidentally, in this case, even when completing the processing from step S3200 through S3700, it is the first execution of processing after the change of the Usf value (S3800: NO), and therefore the processing goes to step S3900.

Upon the completion of the string of processing as the result of the judgment in step S3900 (S3900: YES) or as the result of the judgment in step S3800 (S3800: YES), each value of parameters at the time of the end, Usf, Tra_flag, Rxmin, Txmin, and Txmax, is outputted as information.

In short, also in this case, first, if not to use the shifted USF, it is checked whether it is possible for the MS to use Tᵣₐ as a period accommodating adjacent cell signal level measurement, that is, whether it is possible for the MS to use Tᵣₐ and T_{tb} as a combination of intervals. Specifically, if the number of downlink receive slots (Rx) is greater than the number of uplink transmit slots (Tx) (S3300: YES), and if Rx + Tt is equal to or greater than 3 (here, Usf = 0) (S3400: NO), Txmin is set to Tr + Rx + Tt (S3600), and otherwise, Txmin is set to Tr + 3 (S3500). Then, Txmax is set to Txmin + Tx (S3700). Then, if Txmax is equal to or less than 8 (S3900: YES), Tᵣₐ is used as a period accommodating adjacent cell signal level measurement, that is, Tᵣₐ and T_{tb} is used as a combination of intervals.

Contrarily, if Txmax exceeds 8 (S3900: NO), as Tra_flag =1 here, it is then checked whether Tₜₐ can be used by the MS as a period accommodating adjacent cell signal level measurement or not, that is, whether T_{rb} and Tₜₐ can be used by the MS as a combination of intervals when not to use the shifted USF. Specifically, if the number of downlink receive slots (Rx) is greater than the number of uplink transmit slots (Tx) (S3300: YES), and if Rx + Tt is equal to or greater than 3 (here, Usf = 0) (S3400: NO), Txmin is set to Tr + Rx + Tt (S3600), and otherwise, Txmin is set to Tr + 3 (S3500). Then, Txmax is set to Txmin + Tx (S3700). Then, if Txmax is equal to or less than 8 (S3900: YES), Tₜₐ is used as a period accommodating adjacent cell signal level measurement, that is, T_{rb} and Tₜₐ is used as a combination of intervals.

Contrarily, if Txmax exceeds 8 (S3900: NO), as Tra_flag = 0 here, then, it is decided to use the shifted USF. It is noted that, also when using the shifted USF, it is first checked whether Tᵣₐ may be used or not by the MS as a period accommodating adjacent cell signal level measurement by performing processing from step S3100 through step S4100, and Tₜₐ is used when Tᵣₐ can not be used. That is, in a case where the shifted USF is used, Tᵣₐ will be used as first preference, but if this is not possible Tₜₐ will be used as second preference.

It is noted that, though the operation example in figure 13 assumes the processing in step S3200 through step S3700 to be reexecuted once again after step S4100 for each Usf value, the invention is not limited to such a case. If any parameters other than Usf and Tra_flag (for example, Rxmin, Txmin, Txmax, etc.) are unnecessary as output, that is, if it is just enough to set Usf and Tra_flag only, the processing may be ended immediately without repeating any processing from step S3200 through step S3700 after step S4100.

The timing controller 220 is responsible for determining and controlling the timing of the transmission and reception of signals toward the mobile station 100. In accordance with the calculation result of the slot allocation calculator 228, the timing controller 220 controls the precise timing and behavior of the radio frequency modulator 222, radio frequency demodulator 208, baseband data receiver 206, baseband transmitter 224, multiplexer MS 210, and demultiplexer MS 234. Specifically, it controls each section in such a manner that, if Tra_flag = 1, Tᵣₐ is used as a period accommodating adjacent cell signal level measurement, whereas if Tra_flag = 0, Tₜₐ is used as a period accommodating adjacent cell signal level measurement, and in such a manner that a shifted Usf is not used when Usf = 0, and a shifted Usf is used when Usf = -1.

### Downlink

User data and control data transmitted from a Base Station Controller 230 is accepted by a BSC interface unit 218, and given to a Layer 3 protocol unit 216. The Layer 3 protocol unit 216 multiplexes the data with any radio resource control data, and transmits it via a Layer 2 protocol unit 214. The Layer 2 protocol unit 214 in turn transmits the multiplexed data to a demultiplexer MS 234. The demultiplexer MS 234 provides the data for each mobile station 100 on the correct TDMA slot to the correct baseband transmitter 224. Subsequently, the data is modulated by a radio frequency modulator 222, and then is transmitted over a transmit antenna 204. If multiple transmit frequencies are used, there is one set of radio frequency modulator 222 and baseband data transmitter 224 per frequency.

## Claims

1. A method for controlling packet data transmissions in a TDMA mobile communications system wherein transmitters and receivers share channel resources dynamically for uplink and downlink operating periods and where downlink signals control subsequent uplink resource allocations in a fixed predefined timing relationship, wherein assignment of alternative redefined timing relationships to increase the availability of uplink resources when uplink resources are otherwise constrained by prescribed allocations of measurement and turnaround periods.

2. A mobile station (100) for packet data transmissions in a mobile communications system, comprising:
a transmitter (124) adapted to dynamically share channel resources for uplink and downlink operating periods with a receiver (106); and
a slot allocation calculator (128) adapted to allocate uplink resources in a predefined timing relationship controlled by the downlink signals,
wherein said slot allocation calculator (128) is adapted to redefine timing relationships to increase the availability of uplink resources when uplink resources are otherwise constrained by prescribed allocations of measurement and turnaround periods.

3. A base station (200) for packet data transmissions in a mobile communications system, comprising:
a transmitter (224) adapted to dynamically share channel resources for uplink and downlink operating periods with a receiver (206); and
a slot allocation calculator (228) adapted to allocate uplink resources in a predefined timing relationship controlled by the downlink signals,
wherein said slot allocation calculator (228) is adapted to redefine timing relationships to increase the availability of uplink resources when uplink resources are otherwise constrained by prescribed allocations of measurement and turnaround periods.
